# EUROPEAN PATENT SPECIFICATION

(11) **EP 2 129 712 B1**
(45) Date of publication and mention of the grant of the patent: **08.08.2012**
(21) Application number: 08744554.0
(22) Date of filing: 28.03.2008
(51) Int. Cl.: C08J 9/00, C08J 9/14

(54) **BLOWING AGENT COMPOSITIONS OF HYDROCHLOROFLUOROOLEFINS FOR THERMOPLASTIC FOAMS**
BLASMITTELZUSAMMENSETZUNGEN AUS HYDROCHLOROFLUOROOLEFINEN FÜR THERMOPLASTISCHE SCHÄUME
COMPOSITIONS D'AGENT DE SOUFFLAGE D'HYDROCHLOROFLUOROOLÉFINES POUR MOUSSES THERMOPLASTIQUES

(30) Priority: 29.03.2007 US 908762 P
(43) Date of publication of application: 09.12.2009
(73) Proprietor: Arkema, Inc., Philadelphia, Pennsylvania 19103 (US)
(72) Inventor: VAN HORN, Brett L., King of Prussia, Pennsylvania 19406 (US); ELSHEIKH, Maher Y., Wayne, Pennsylvania 19087 (US); CHEN, Benjamin B., Wayne, Pennsylvania 19087 (US); BONNET, Philippe, Lower Merion, Pennsylvania 19085 (US)
(74) Representative: Dang, Doris
(86) International application number: PCT/US2008/058596
(87) International publication number: WO 2008/121779

(56) References cited:
- WO-A2-2006/069362
- WO-A2-2007/002625
- WO-A2-2007/002703
- US-A- 4 085 073
- US-A1- 2006 142 173
- US-A1- 2006 243 945

## Description

### Summary of Invention

The present invention relates to blowing agent compositions comprising at least one hydrochlorofluoroolefin (HCFO) used in the preparation of foamable thermoplastic compositions. The HCFOs of the present invention include, but are not limited to, 1-chloro-3, 3,3-trifluoropropene (HCFO-1233zd), particularly the trans- isomer, 2-chloro-3,3,3-trifluoropropene (HCFO-1233xf), dichloro-fluorinated propenes, and mixtures thereof. The blowing agent compositions of the present invention are preferably used with coblowing agents including carbon dioxide, atmospheric gases, hydrofluorocarbons (HFC), hydrofluoroolefns (HFO), alkanes, hydrofluoroethers (HFE), and mixtures thereof. Preferred HFCs used as coblowing agents in the present invention include, but are not limited to, 1,1,1,2-tetrafluoroethane (HFC-134a); 1,1-difluoroethane (HFC-152a); 1,1,1-trifluoroethane (HFC-143a); pentafluorethane (HFC-125); and difluoromethane (HFC-32). The blowing agent compositions are useful in the production of low density insulating foams with improved k-factor.

### Background of Invention

With the continued concern over global climate change there is an increasing need to develop technologies to replace those with high ozone depletion potential (ODP) and high global warming potential (GWP). Though hydrofluorocarbons (HFC), being non-ozone depleting compounds, have been identified as alternative blowing agents to chlorofluorocarbons (CFCs) and hydrochlorofluorocarbons (HCFCs) in the production of thermoplastic foams, they still tend to have significant GWP.

It was discovered that blowing agent compositions comprising a hydrochlorofluorolefin, particularly HCFO-1233zd, HCFO-1233xf, dichloro-fluorinated propenes, and mixtures thereof can permit the production of lower density, closed-cell foam and good k-factor which will be particularly useful for thermal insulating foams. This invention may also permit the production of low density, closed-cell foams with enlarged, controlled cell size.

WO 2004/037913, WO 2007/002703, and US Pat. Publication 2004119047 disclose blowing agents comprising halogenated alkenes of generic formula that would include numerous HCFOs, among many other materials including brominated and iodinated compounds and HFOs. Specific HCFOs for use in thermoplastic foaming are not disclosed nor are the benefits of using the HCFOs in terms of increasing the foam cell size as discovered in the present invention. HCFO-1233zd is disclosed for use in polyurethane foaming, however it is not obvious to one skilled in the art that a blowing agent for polyurethane foaming would be particularly good for thermoplastic foaming.

GB 950,876 discloses a process for the production of polyurethane foams. It discloses that any suitable halogenated saturated or unsaturated hydrocarbon having a boiling point below 150°C, preferably below 50°C, can be used as the blowing agent. Trichlorofluoroethene, chlorotrifluoroethene, and 1,1-dichloro-2,2-difluoroethene are disclosed in a list of suitable blowing agents. Hydrochlorofluoropropenes are not specifically disclosed nor are longer chain HCFOs. There is no disclosure related to blowing agents for thermoplastic foaming nor are the benefits of HCFOs in thermoplastic foaming mentioned nor preferred combinations of HCFOs with other coblowing agents.

CA 2016328 discloses a process for preparing closed-cell, polyisocyanate foam. Disclosed are organic compound blowing agents including halogenated alkanes and alkenes, where the alkene is propylene, and the halogenated hydrocarbons can be chlorofluorocarbons. Among the many exemplary compounds listed are specific chlorofluoroethylenes containing 1 chlorine and from 1 to 3 fluorines. Hydrochlorofluoropropenes are not specifically disclosed nor are longer chain HCFOs. There is no disclosure related to blowing agents for thermoplastic foaming nor are the benefits of HCFOs in thermoplastic foaming mentioned nor preferred combinations of HCFOs with other coblowing agents.

### Detailed Description of Invention

The present invention relates to the use of blowing agents with negligible ozone-depletion and low GWP comprising a hydrochlorofluoroolefin (HCFO) used with an additional blowing agent. The present invention discloses blowing agent and foamable resin compositions useful for the production of foams with decreased density, enlarged cell size, and improved k-factor that can be used as insulating foams. In a preferred embodiment of this invention the HCFO is 1-chloro-3,3,3-trilfluoropropene (HCFO-1233zd), preferably the trans isomer; 2-chloro-3,3,3-trifluoropropene (HCFO-1233xf), and mixtures thereof. Preferred coblowing agents to be used with the HCFO include hydrofluorocarbons (HFC), preferably 1,1,1,2-tetrafluoroethane; 1,1-difluoroethane (HFC-152a); pentafluoroethane (HFC-125); 1,1,1-trifluoroethane (HFC-143a); difluoromethane (HFC-32); hydrofluoroolefins (HFO), preferably 3,3,3-trifluoropropene (HFO-1243zf); 1,3,3,3-tetrafluoropropene (HFO-1234ze), particularly the trans isomer; 2,3,3,3-tetrafluoropropene (HFO-1234yf); (cis and/or trans)-1,2,3,3,3-pentafluoropropene (HFO-1225ye); carbon dioxide; alkanes, preferably a butane or a pentane, and mixtures thereof.

Another embodiment of this invention are foamable resin compositions containing greater than about 1 parts per hundred (pph) and less than about 100pph of the blowing agent composition with respect to resin, preferably greater than about 2pph and less than about 40pph, more preferably greater than about 3pph and less than about 25pph, and even more preferably greater than about 4 pph and less than about 15 pph of the blowing agent composition with respect to resin.

The process for preparing a foamed thermoplastic product is as follows: Prepare a foamable polymer composition by blending together components comprising foamable polymer composition in any order. Typically, prepare a foamable polymer composition by plasticizing a polymer resin and then blending in components of a blowing agent composition at an initial pressure. A common process of plasticizing a polymer resin is heat plasticization, which involves heating a polymer resin enough to soften it sufficiently to blend in a blowing agent composition. Generally, heat plasticization involves heating a thermoplastic polymer resin near or above its glass transition temperature (Tg), or melt temperature (Tm) for crystalline polymers.

A foamable polymer composition can contain additional additives such as nucleating agents, cell-controlling agents, dyes, pigments, fillers, antioxidants, extrusion aids, stabilizing agents, antistatic agents, fire retardants, IR attenuating agents and thermally insulating additives. Nucleating agents can include, among others, materials such as talc, calcium carbonate, sodium benzoate, and chemical blowing agents such azodicarbonamide or sodium bicarbonate and citric acid. IR attenuating agents and thermally insulating additives can include carbon black, graphite, silicon dioxide, metal flake or powder, among others. Flame retardants can include, among others, brominated materials such as hexabromocyclodecane and polybrominated biphenyl ether.

Foam preparation processes of the present invention include batch, semi-batch, and continuous processes. Batch processes involve preparation of at least one portion of the foamable polymer composition in a storable state and then using that portion of foamable polymer composition at some future point in time to prepare a foam.

A semi-batch process involves preparing at least a portion of a foamable polymer composition and intermittently expanding that foamable polymer composition into a foam all in a single process. For example, U.S. Pat. No. 4,323,528 discloses a process for making polyolefin foams via an accumulating extrusion process. The process comprises: 1) mixing a thermoplastic material and a blowing agent composition to form a foamable polymer composition; 2) extruding the foamable polymer composition into a holding zone maintained at a temperature and pressure which does not allow the foamable polymer composition to foam; the holding zone has a die defining an orifice opening into a zone of lower pressure at which the foamable polymer composition foams and an openable gate closing the die orifice; 3) periodically opening the gate while substantially concurrently applying mechanical pressure by means of a movable ram on the foamable polymer composition to eject it from the holding zone through the die orifice into the zone of lower pressure, and 4) allowing the ejected foamable polymer composition to expand to form the foam.

A continuous process involves forming a foamable polymer composition and then expanding that foamable polymer composition in a non-stop manner. For example, prepare a foamable polymer composition in an extruder by heating a polymer resin to form a molten resin, blending into the molten resin a blowing agent composition at an initial pressure to form a foamable polymer composition, and then extruding that foamable polymer composition through a die into a zone at a foaming pressure and allowing the foamable polymer composition to expand into a foam. Desirably, cool the foamable polymer composition after addition of the blowing agent and prior to extruding through the die in order to optimize foam properties. Cool the foamable polymer composition, for example, with heat exchangers.

Foams of the present invention can be of any form imaginable including sheet, plank, rod, tube, beads, or any combination thereof. Included in the present invention are laminate foams that comprise multiple distinguishable longitudinal foam members that are bound to one another.

### EXAMPLES

### EXAMPLES 1 - 7: Solubility and Diffusivity of Gases in Polystyrene

The solubility and diffusivity of gases in polystyrene resin was measured using capillary column inverse gas chromatography (cc-IGC) as described in: Hadj Romdhane, Ilyess (1994) "Polymer-Solvent Diffusion and Equilibrium Parameters by Inverse Gas-Liquid Chromatography" PhD Dissertation, Dept. of Chem. Eng., Penn State University. and Hong SU, Albouy A, Duda JL (1999) "Measurement and Prediction of Blowing Agent Solubility in Polystyrene at Supercritical Conditions" Cell Polym 18(5):301-313.

A 15m long, 0.53mm diameter GC capillary-column was prepared with a 3 micron thick polystyrene internal film coating. The column was installed into a Hewlet Packard 5890 Series II Gas Chromatograph with flame ionizer detector. Elution profiles for gases being tested were analyzed according the method outlined in the reference, using methane as the reference gas. The results give the diffusion coefficient of the gas through the polymer, Dp, and the solubility of the gas in the polymer in terms of the partition coefficient, K, which is the ratio of the concentration of the gas in the polymer phase to the concentration in the vapor phase. As such, the greater the value of K for a particular gas in the resin the greater its solubility in that resin.

Table 1 shows the partition coefficient and diffusivity values for several gases in polystyrene at 140°C. Comparative examples 1-5 show the solubility and diffusivity of HCFC-142b (1-chloro-1,1-difluoroethane), HFC-152a (1,1-difluoroethane), HFC-134a (1,1,1,2-tetrafluoroethane), HFC-32 (difluoromethane), and HFC-245fa (1,1,1,3,3-pentafluoropropane) in polystyrene (PS). Examples 6 and 7 show the solubility and diffusivity of trans-HCFO-1233zd (1-chloro-3,3,3-trifluoropropene) and HCFO-1233xf (2-chloro-3,3,3-trifluoropropene).

These examples show that HCFO-1233zd and HCFO-1233xf have sufficient solubility and diffusivity in polystyrene resin to be effective blowing agents or as useful coblowing agents with other blowing agents such as HFCs or carbon dioxide. HCFO-1233xf, for instance, was found to have a solubility comparable to that of HCFC-142b. The diffusivities of HCFO-1233zd and HCFO-1233xf were found to be low, indicating that should be useful in providing foams with improved k-factor.

**TABLE 1: Partition Coefficient and Diffusivity of Gases in Polystyrene at 140°C by Inverse Gas Chromatography**

| Example | Gas | Bp (°C) | Mw (g/mol) | K | Dp (cm²/s) |
|---|---|---|---|---|---|
| 1 | HCFC-142b | -9.8 | 100.5 | 1.249 | 2.61E-08 |
| 2 | HFC-152a | -24.1 | 66.05 | 0.734 | 9.49E-08 |
| 3 | HFC-134a | -26.1 | 102.02 | 0.397 | 3.40E-08 |
| 4 | HFC-32 | -51.7 | 52.02 | 0.436 | 1.95E-07 |
| 5 | HFC-245fa | 15.1 | 134.05 | 0.639 | 2.05E-08 |
| | | | | | |
| 6 | HCFO-1233zd | 20.5 | 130.5 | 2.326 | 1.72E-08 |
| 7 | HCFO-1233xf | 15 | 130.5 | 1.475 | 1.67E-08 |

### EXAMPLES 8 - 20

Extruded polystyrene foam was produced using a counter-rotating twin screw extruder with internal barrel diameters or 27mm and a barrel length of 40 diameters. The screw design was suitable for foaming applications. The pressure in the extruder barrel was controlled with the gear pump and was set high enough such that the blowing agent dissolved in the extruder. The extruder die for examples 9 - 20 was an adjustable-lip slot die with a gap width of 6.35mm. For example 1, the die was a 2mm diameter strand die with a 1mm land length. Two grades of general purpose polystyrene were used for the extrusion trials and fed to the extruder at rates of either 2.27 or 4.54 kg/hr (5 or 10 lb/hr). Blowing agents were pumped into the polystyrene resin melt at a controlled rate using high pressure delivery pumps. In the extruder, the blowing agent is mixed and dissolved in the resin melt to produce an expandable resin composition. The expandable resin composition is cooled to an appropriate foaming temperature and then extruded from the die where the drop in pressure initiates foaming. Talc was used as a nucleating agent and was pre-blended with polystyrene to make a masterbatch of 50wt% talc in polystyrene. Beads of this masterbatch were mixed with polystyrene pellets to achieve 0.5 wt% talc in each experiment.

The density, open cell content, and cell size was measured for foam samples collected during each run. Density was measured according to ASTM D792, open cell content was measured using gas pychnometry according to ASTM D285-C, and cell size was measured by averaging the cell diameters from scanning electron microscope (SEM) micrographs of foam sample fracture surfaces. SEM images are also used to observe the cell structure and qualitatively check for open cell content.

Table 2 shows data for examples 8 through 20, including the loading of each blowing agent in the formulation, the resin feed rate, melt flow index of the resin, the expandable resin melt temperature, and the density, cell size, and open cell content of the resulting foamed product.

Comparative example 8 is typical for polystyrene foaming with HFC-134a, where the poor solubility and difficulties in processing tend to lead to higher density foam with smaller size and more open cells. Increasing the amount of HFC-134a in the formulation above the solubility limit, around 6.5wt% 134a for this system, was found to lead to many problems including blow holes, defects, foam collapse, large voids, high open cell content, and others.
Comparative examples 9 and 10 show results for foaming with 3,3,3-trifluoropene (HFO-1243zf; TFP).

In examples 11 and 12, blowing agent compositions of TFP (HFO-1243zf) and HCFO-1233zd permitted production of lower density foam than achievable with TFP alone along with a beneficial enlargement in the cell size, where it was possible to produce closed-cell foam product with cell sizes greater than 0.2mm at densities less than 53 kg/m³ and even less than 45 kg/m³. These foams would be useful as thermal insulating foams with improved k-factor.

Examples 13 through 16 were produced during the same extrusion trial. In examples 13, HFC-134a was used as the only blowing agent at a loading of 5.3wt%. The foamed product had significant defects including blowholes and large voids. During foam extrusion there was frequent popping at the die caused by undissolved blowing agent exiting the die. Following example 13, HCFO-1233zd, predominantly the trans isomer, was added to produce example 14, which resulted in reduction of the popping at the die with a reduction in the die pressure along with reducing the number of defects in the foamed product. Then the blowing agent feeds were adjusted to generate examples 15 and 16, where there was no popping at the die and only a few defects. The foam of example 13, blown using only HFC-134a, had a very broad or bimodal cell size distribution, with cell sizes ranging from around 0.05mm to around 1mm, with the larger cells near the center of the sample. The foams blown with combinations of 134a and HCFO-1233zd also had non-uniform cell size distributions, with the larger cells near the core of the samples, but with much narrower distributions without the very large cells. HCFO-1233zd improved the processing of the 134a blown foams, improved the general quality of the foamed product, and permitted production of lower density foam.

Examples 17 and 18 were produced during using HFO-1234yf (2,3,3,3-tetrafluoroethane) as the only blowing agent. At a loading of 5.7wt% 1234yf, as shown in example 18, the foamed product had very small cell size, macrovoids, blowholes, high open cell content, and frequent periods of popping at the die caused by undissolved blowing agent. Increasing the content of 1234yf made these problems worse. For examples 19 and 20, blowing agent compositions of HFO-1234yf and HCFO-1233zd permitted production of lower density foam than was produced using the HFO-1234yf alone. The foamed samples of examples 19 and 20 were of good quality, with few defects and produced without popping at the die. The HCFO-1233zd was predominantly the trans-isomer.

**Table 2**

| Example | Blowing Agent Loading | | | | Polystyrene Resin | | | Foam Properties | | |
|---|---|---|---|---|---|---|---|---|---|---|
| | 134a (wit%) | TFP (wt%) | 1234yf (wt%) | 1233zd (wt%) | Feed (kg/hr) | MFI (g/10min) | T_{zk} (°C) | Density (kg/m³) | Cell Size (mm) | OCC (%) |
| 8 | 6.4 | - | - | - | 2.27 | 4.0 | 111 | 60.9 | 0.06 | 23 |
| | | | | | | | | | | |
| 9 | - | 6.6 | - | - | 2.27 | 11.0 | 114 | 57.6 | 0.11 | <5 |
| 10 | - | 7.2 | - | - | 2.27 | 11.0 | 115 | 56.5 | 0.11 | < 5 |
| | | | | | | | | | | |
| 11 | - | 4.1 | - | 66 | 4.54 | 11.0 | 113 | 44.3 | 0.29 | <5 |
| 12 | - | 6.5 | - | 3.4 | 4.54 | 11.0 | 113 | 52.5 | 0.35 | <5 |
| | | | | | | | | | | |
| 13 | 53 | - | - | - | 4.54 | 11.0 | 118 | 76.5 | defects | - 10 |
| 14 | 5.0 | - | - | 5.0 | 4.54 | 11.0 | 116 | 49.9 | 0.05. 0.20 | - 10 |
| 15 | 4.4 | - | - | 4.3 | 4.54 | 11.0 | 116 | 48.0 | 0.08. 0.25 | - 10 |
| 16 | 4.4 | - | - | 5.0 | 4.54 | 11.0 | 116 | 45.6 | 0.09. 0.16 | - 10 |
| | | | | | | | | | | |
| 17 | | | 4.4 | - | 4.54 | 11.0 | 117 | 90.9 | 0.15 | 5 |
| 18 | - | - | 5.7 | - | 4.54 | 11.0 | 115 | 71.6 | 006 | 31.4 |
| 19 | - | - | 4.2 | 4.3 | 4.54 | 11.0 | 114 | 55.2 | 0.12 | < 5 |
| 20 | - | - | 4.8 | 5.0 | 4.54 | 11.0 | 113 | 53.5 | 0.08 | < 5 |
| | | | | | | | | | | |

## Claims

1. Use of a blowing agent composition comprising a hydrochlorofluoroolefin selected from 1-chloro-3,3,3-trifluoropropene, 2-chloro-3,3,3-trifluoropropene, a dichloro-fluorinated propene, or mixtures thereof and a hydrofluorocarbon, an alkane, carbon dioxide, an atmospheric gas, an inert gas, and mixtures thereof, for thermoplastic foam.

2. Use according to claim 1 **characterised in that** the composition further comprising a hydrofluoroolefin.

3. Use according to claim 1 wherein said 1-chloro-3,3,3-trifluoropropene contains greater than 75wt% of the trans- isomer.

4. Use according to claim 1 wherein said hydrofluorocarbon is selected from HFC-134a (1,1,1,2-tetrafluoroethane), HFC-134 (1,1,2,2-tetrafluoroethane), HFC-152a (1,1-difluoroethane), HFC-152 (1,2-difluoroethane), HFC-32 (difluoromethane), HFC-143a (1,1,1-trifluoroethane), HFC-143 (1,1,2-trifluoroethane), fluoroethane, HFC-236fa (1,1,1,3,3,3-hexafluoropropane), HFC-236ea, HFC-227ea (1,1,1,2,3,3,3- heptafluoropropane), HFC-125 (pentafluoroethane), HFC-365mfc (1,1,1,3,3-pentafluorobutane), HFC-245fa (1,1,1,3,3-pentafluoropropane), or mixtures thereof.

5. Use according to claim 4 wherein said hydrofluorocarbon is selected from HFC-134a (1,1,1,2-tetrafluoroethane), HFC-152a (1,1-difluoroethane), HFC-32 (difluoromethane), HFC-143a (1,1,1-trifluoroethane), or mixtures thereof.

6. Use according to claim 4 or 5 wherein said hydrofluorocarbon is HFC-134a (1,1,1,2-tetrafluoroethane).

7. Use according to claim 2 wherein said hydrofluoroolefin is selected from C3 through C5 fluorinated alkene or mixtures thereof.

8. Use according to claim 7 wherein said fluorinated alkene is selected from trifluoropropene, tetrafluoropropene, pentalfuoropropene, or mixtures thereof.

9. Use according to claim 8 wherein said trifluoropropene is 3,3,3-trifluoropropene.

10. Use according to claim 8 wherein said tetrafluoropropene is selected from cis-1,3,3,3-tetrafluoropropene; trans-1,3,3,3-tetrafluoropropene; 2,3,3,3-tetrafluoropropene, or mixtures thereof.

11. Use according to claim 8 wherein said pentafluoropropene is selected from cis-1,2,3,3,3-pentafluoropropene; trans-1,2,3,3,3-pentafluoropropene, or mixtures thereof.

12. Use according to claim 1 wherein said alkane is selected from propane, butane, pentane, hexane, or mixtures thereof.

13. Use according to claim 12 wherein said pentane is selected from n-pentane, cyclopentane, iso-pentane or mixtures thereof.

14. Use according to claim 1 wherein the composition further comprises an alcohol.

15. Use according to claim 14 wherein said alcohol is selected from ethanol, iso-propanol, propanol, butanol, ethyl hexanol, methanol, or mixtures thereof.

16. Use according to claim 1 wherein further the composition comprises an ether.

17. Use according to claim 16 wherein said ether is selected from dimethyl ether, diethyl ether, methylethyl ether, or mixtures thereof.

18. Use according to claim 1 wherein the composition further comprising a ketone.

19. Use according to claim 18 wherein said ketone is selected from acetone, methyl ethyl ketone, and mixtures thereof.

20. Use according to claim 1 wherein said thermoplastic foam is selected from polystyrene, polyethylene, polypropylene, or mixtures thereof.

21. A foamable resin composition comprising a blowing agent composition of claim 1 and a thermoplastic resin.

22. The foamable resin composition of claim 21 wherein said thermoplastic resin is selected from polystyrene, polyethylene, polypropylene, or mixtures thereof.

23. The foamable resin composition of claim 21 comprising less than 100pph of said blowing agent with respect to said thermoplastic resin.

24. The foamable resin composition of claim 21 comprising from 1pph to 100pph of said blowing agent with respect to said thermoplastic resin.

25. The foamable resin composition of claim 21 comprising from 2pph to 40pph of said blowing agent with respect to said thermoplastic resin.

26. The foamable resin composition of claim 21 comprising from 3pph to 25pph of said blowing agent with respect to said thermoplastic resin.

27. The foamable resin composition of claim 21 comprising from 4pph to 15pph of said blowing agent with respect to said thermoplastic resin.

28. Use according to claim 1 wherein the composition further comprising dyes, pigments, cell-controlling agents, fillers, antioxidants, extrusion aids, stabilizing agents, antistatic agents, fire retardants, IR attenuating agents, thermally insulating additives, plasticizers, viscosity modifiers, impact modifiers, gas barrier resins, carbon black, surfactant, and mixtures thereof.

29. A foamed product produced using the blowing agent composition of claim 1.

## Patentansprüche

1. Verwendung einer Treibmittelzusammensetzung, umfassend ein Hydrochlorfluorolefin, das unter 1-Chlor-3,3,3-trifluorpropen, 2-Chlor-3,3,3-trifluorpropen, einem dichlorfluorierten Propen oder Mischungen davon ausgewählt ist, und einen teilfluorierten Fluorkohlenwasserstoff, ein Alkan, Kohlendioxid, ein Atmosphärengas, ein Inertgas und Mischungen davon, für thermoplastischen Schaumstoff .

2. Verwendung nach Anspruch 1, **dadurch gekennzeichnet, dass** die Zusammensetzung ferner ein Hydrofluorolefin umfasst.

3. Verwendung nach Anspruch 1, wobei das 1-Chlor-3,3,3-trifluorpropen mehr als 75 Gew.-% des trans-Isomers enthält.

4. Verwendung nach Anspruch 1, wobei der teilfluorierte Fluorkohlenwasserstoff unter H-FKW 134a (1,1,1,2-Tetrafluorethan), H-FKW 134 (1,1,2,2-Tetrafluorethan), H-FKW 152a (1,1-Difluorethan), H-FKW 152 (1,2-Difluorethan), H-FKW 32 (Difluormethan), H-FKW 143a (1,1,1-Trifluorethan), H-FKW 143 (1,1,2-Trifluorethan), Fluorethan, H-FKW 236fa (1,1,1,3,3,3-Hexafluorpropan), H-FKW 236ea, H-FKW 227ea (1,1,1,2,3,3,3-Heptafluorpropan), H-FKW 125 (Pentafluorethan), H-FKW 365mfc (1,1,1,3,3-Pentafluorbutan), H-FKW 245fa (1,1,1,3,3-Pentafluorpropan) oder Mischungen davon ausgewählt ist.

5. Verwendung nach Anspruch 4, wobei der teilfluorierte Fluorkohlenwasserstoff unter H-FKW 134a (1,1,1,2-Tetrafluorethan), H-FKW 152a (1,1-Difluorethan), H-FKW 32 (Difluormethan), H-FKW 143a (1,1,1-Trifluorethan) oder Mischungen davon ausgewählt ist.

6. Verwendung nach Anspruch 4 oder 5, wobei es sich bei dem teilfluorierten Fluorkohlenwasserstoff um H-FKW 134a (1,1,1,2-Tetrafluorethan) handelt.

7. Verwendung nach Anspruch 2, wobei das Hydrofluorolefin unter fluoriertem C3- bis C5-Alken oder Mischungen davon ausgewählt ist.

8. Verwendung nach Anspruch 7, wobei das fluorierte Alken unter Trifluorpropen, Tetrafluorpropen, Pentafluorpropen oder Mischungen davon ausgewählt ist.

9. Verwendung nach Anspruch 8, wobei es sich bei dem Trifluorpropen um 3,3,3-Trifluorpropen handelt.

10. Verwendung nach Anspruch 8, wobei das Tetrafluorpropen unter cis-1,3,3,3-Tetrafluorpropen, trans-1,3,3,3-Tetrafluorpropen, 2,3,3,3-Tetrafluorpropen oder Mischungen davon ausgewählt ist.

11. Verwendung nach Anspruch 8, wobei das Pentafluorpropen unter cis-1,2,3,3,3-Pentafluorpropen, trans-1,2,3,3,3-Pentafluorpropen oder Mischungen davon ausgewählt ist.

12. Verwendung nach Anspruch 1, wobei das Alkan unter Propan, Butan, Pentan, Hexan oder Mischungen davon ausgewählt ist.

13. Verwendung nach Anspruch 12, wobei das Pentan unter n-Pentan, Cyclopentan, Isopentan oder Mischungen davon ausgewählt ist.

14. Verwendung nach Anspruch 1, wobei die Zusammensetzung ferner einen Alkohol umfasst.

15. Verwendung nach Anspruch 14, wobei der Alkohol unter Ethanol, Isopropanol, Propanol, Butanol, Ethylhexanol, Methanol oder Mischungen davon ausgewählt ist.

16. Verwendung nach Anspruch 1, wobei die Zusammensetzung ferner einen Ether umfasst.

17. Verwendung nach Anspruch 16, wobei der Ether unter Dimethylether, Diethylether, Methylethylether oder Mischungen davon ausgewählt ist.

18. Verwendung nach Anspruch 1, wobei die Zusammensetzung ferner ein Keton umfasst.

19. Verwendung nach Anspruch 18, wobei das Keton unter Aceton, Methylethylketon und Mischungen davon ausgewählt ist.

20. Verwendung nach Anspruch 1 wobei der thermoplastische Schaumstoff unter Polystyrol, Polyethylen, Polypropylen oder Mischungen davon ausgewählt ist.

21. Verschäumbare Harzzusammensetzung, umfassend eine Treibmittelzusammensetzung gemäß Anspruch 1 und ein thermoplastisches Harz.

22. Verschäumbare Harzzusammensetzung nach Anspruch 21, wobei das thermoplastische Harz unter Polystyrol, Polyethylen, Polypropylen oder Mischungen davon ausgewählt ist.

23. Verschäumbare Harzzusammensetzung nach Anspruch 21, umfassend weniger als 100 pph des Treibmittels, bezogen auf das thermoplastische Harz.

24. Verschäumbare Harzzusammensetzung nach Anspruch 21, umfassend 1 pph bis 100 pph des Treibmittels, bezogen auf das thermoplastische Harz.

25. Verschäumbare Harzzusammensetzung nach Anspruch 21, umfassend 2 pph bis 40 pph des Treibmittels, bezogen auf das thermoplastische Harz.

26. Verschäumbare Harzzusammensetzung nach Anspruch 21, umfassend 3 pph bis 25 pph des Treibmittels, bezogen auf das thermoplastische Harz.

27. Verschäumbare Harzzusammensetzung nach Anspruch 21, umfassend 4 pph bis 15 pph des Treibmittels, bezogen auf das thermoplastische Harz.

28. Verwendung nach Anspruch 1, wobei die Zusammensetzung ferner Farbstoffe, Pigmente, Zellregler, Füllstoffe, Antioxidantien, Extrusionshilfsmittel, Stabilisiermittel, Antistatika, Flammschutzmittel, IR-Abschwächungsmittel, wärmeisolierende Additive, Weichmacher, Viskositätsmodifikatoren, Schlagzähigkeitsmodifikatoren, Gasbarriereharze, Ruß, Tenside und Mischungen davon umfasst.

29. Verschäumtes Produkt, hergestellt unter Verwendung der Treibmittelzusammensetzung gemäß Anspruch 1.

## Revendications

1. Utilisation d'une composition d'agent d'expansion comprenant une hydrochlorofluorooléfine choisie parmi le 1-chloro-3,3,3-trifluoropropène, 2-chloro-3,3,3-trifluoropropène, un propène dichlorofluoré, ou leurs mélanges, et un hydrofluorocarbure, un alcane, du dioxyde de carbone, un gaz atmosphérique, un gaz inerte, et leurs mélanges, pour préparer une mousse thermoplastique.

2. Utilisation selon la revendication 1 **caractérisée en ce que** la composition comprend en outre une hydrofluorooléfine.

3. Utilisation selon la revendication 1 dans laquelle ledit 1-chloro-3,3,3-trifluoropropène contient plus de 75% en poids de l'isomère trans.

4. Utilisation selon la revendication 1 dans laquelle ledit hydrofluorocarbure est choisi parmi le HFC-134a (1,1,1,2-tétrafluoroéthane), le HFC-134 (1,1,2,2-tétrafluoroéthane), le HFC-152a (1,1-difluoroéthane), le HFC-152 (1,2-difluoroéthane), le HFC-32 (difluorométhane), le HFC-143a (1,1,1-trifluoroéthane), le HFC-143 (1,1,2-trifluoroéthane), le fluoroéthane, le HFC-236fa (1,1,1,3,3,3-hexafluoropropane), le HFC-236ea, le HFC-227ea (1,1,1,2,3,3,3-heptafluoropropane), le HFC-125 (pentafluoroéthane), le HFC-365mfc (1,1,1,3,3-pentafluorobutane), le HFC-245fa (1,1,1,3,3-pentafluoropropane), ou leurs mélanges.

5. Utilisation selon la revendication 4 dans laquelle ledit hydrofluorocarbure est choisi parmi le HFC-134a (1,1,1,2-tétrafluoroéthane), le HFC-152a (1,1-difluoroéthane), le HFC-32 (difluorométhane), le HFC-143a (1,1,1-trifluoroéthane), ou leurs mélanges.

6. Utilisation selon la revendication 4 ou 5 dans laquelle ledit hydrofluorocarbure est le HFC-134a (1,1,1,2-tétrafluoroéthane).

7. Utilisation selon la revendication 2 dans laquelle ladite hydrofluorooléfine est choisie parmi un alcène fluoré en C3 à C5 ou des mélanges de ceux-ci.

8. Utilisation selon la revendication 7 dans laquelle ledit alcène fluoré est choisi parmi le trifluoropropène, le tétrafluoropropène, le pentafluoropropène, ou leurs mélanges.

9. Utilisation selon la revendication 8 dans laquelle ledit trifluoropropène est le 3,3,3-trifluoropropène.

10. Utilisation selon la revendication 8 dans laquelle ledit tétrafluoropropène est choisi parmi le cis-1,3,3,3-tétrafluoropropène, le trans-1,3,3,3-tétrafluoropropène, le 2,3,3,3-tétrafluoropropène, ou leurs mélanges.

11. Utilisation selon la revendication 8 dans laquelle ledit pentafluoropropène est choisi parmi le cis-1,2,3,3,3-pentafluoropropène, le trans-1,2,3,3,3-pentafluoropropène, ou leurs mélanges.

12. Utilisation selon la revendication 1 dans laquelle ledit alcane est choisi parmi le propane, le butane, le pentane, l'hexane, ou leurs mélanges.

13. Utilisation selon la revendication 12 dans laquelle ledit pentane est choisi parmi le n-pentane, le cyclopentane, l'iso-pentane ou leurs mélanges.

14. Utilisation selon la revendication 1 dans laquelle la composition comprend en outre un alcool.

15. Utilisation selon la revendication 14 dans laquelle ledit alcool est choisi parmi l'éthanol, l'isopropanol, le propanol, le butanol, l'éthylhexanol, le méthanol, ou leurs mélanges.

16. Utilisation selon la revendication 1 dans laquelle la composition comprend en outre un éther.

17. Utilisation selon la revendication 16 dans laquelle ledit éther est choisi parmi l'éther diméthylique, l'éther diéthylique, le méthyléthyléther, ou leurs mélanges.

18. Utilisation selon la revendication 1 dans laquelle la composition comprend en outre une cétone.

19. Utilisation selon la revendication 18 dans laquelle ladite cétone est choisie parmi l'acétone, la méthyléthylcétone, et leurs mélanges.

20. Utilisation selon la revendication 1 dans laquelle ladite mousse thermoplastique est choisie parmi le polystyrène, le polyéthylène, le polypropylène, ou leurs mélanges.

21. Composition de résine expansible comprenant une composition d'agent d'expansion selon la revendication 1 et une résine thermoplastique.

22. Composition de résine expansible selon la revendication 21 dans laquelle ladite résine thermoplastique est choisie parmi le polystyrène, le polyéthylène, le polypropylène, ou leurs mélanges.

23. Composition de résine expansible selon la revendication 21 comprenant moins de 100 pph dudit agent d'expansion par rapport à ladite résine thermoplastique.

24. Composition de résine expansible selon la revendication 21 comprenant de 1 pph à 100 pph dudit agent d'expansion par rapport à ladite résine thermoplastique.

25. Composition de résine expansible selon la revendication 21 comprenant de 2 pph à 40 pph dudit agent d'expansion par rapport à ladite résine thermoplastique.

26. Composition de résine expansible selon la revendication 21 comprenant de 3 pph à 25 pph dudit agent d'expansion par rapport à ladite résine thermoplastique.

27. Composition de résine expansible selon la revendication 21 comprenant de 4 pph à 15 pph dudit agent d'expansion par rapport à ladite résine thermoplastique.

28. Utilisation selon la revendication 1 dans laquelle la composition comprend en outre des colorants, des pigments, des agents de régulation de la structure alvéolaire, des charges, des antioxydants, des adjuvants d'extrusion, des agents stabilisants, des agents antistatiques, des ignifugeants, des agents d'atténuation des IR, des additifs d'isolation thermique, des plastifiants, des agents modifiant la viscosité, des agents modifiant la résistance au choc, des résines formant barrière aux gaz, du noir de carbone, des tensioactifs, et leurs mélanges.

29. Produit expansé produit au moyen de la composition d'agent d'expansion selon la revendication 1.
